## Europäisches Patentamt

## European Patent Office

## Office européen des brevets

(19)

(11) Veröffentlichungsnummer: **0 223 173**
**A1**

(12) ## EUROPÄISCHE PATENTANMELDUNG

(21) Anmeldenummer: **86115543.0**

(22) Anmeldetag: **10.11.86**

(51) Int. Cl.⁴: **F 16 L 23/00**, E 06 B 7/086,
F 24 F 13/15

(30) Priorität: **19.11.85 CH 4929/85**

(43) Veröffentlichungstag der Anmeldung: **27.05.87**
**Patentblatt 87/22**

(84) Benannte Vertragsstaaten: **AT BE CH DE ES FR GB IT LI NL SE**

(71) Anmelder: **Schmidlin AG, Zürichstrasse 19, CH-8910 Affoltern a.A. (CH)**

(72) Erfinder: **Schmidlin, Walter, Mühlrütlstrasse 12, CH-8910 Affoltern am Albis (CH)**

(74) Vertreter: **Scheidegger, Zwicky, Werner & Co., Stampfenbachstrasse 48 Postfach, CH-8023 Zürich (CH)**

(54) **Rahmenprofil.**

(57) Ein Rahmenprofil (2) dient zur Herstellung eines rechteckförmigen Rahmens, in dem Drehlagerungen insbesondere von drehbaren Klappen (3) enthalten sind. Der Rahmen wird an das Ende eines Lüftungskanals angeflanscht. Um für diese Flanschverbindung Klammern (30) verwenden zu können, ist das im wesentlichen einen U-förmigen Querschnitt aufweisende Rahmenprofil (2) an den durch einen Steg (6) miteinander verbundenen beiden Schenkeln (7) mit einer T-Nut (16) versehen, wobei das äussere Schenkelende eine zum Halsteil der T-Nut (16) hin keilförmig ansteigende Verdickung (21) aufweist. Gegen die Schrägfläche (22) dieser keilförmigen Verdickung (21) ist der zu einem runden Wulst gebogene federnde Arm (31) einer Klammer (30) angedrückt, die einen zweiten um eine Schwenkachse (32) schwenkbaren Arm (33) mit einem zu einem runden Wulst (34) gebogenen Ende besitzt, welches bei in die Klemmstellung verschwenktem Klammerarm (33) gegen eine ähnlich ausgebildete Profilschiene (27) am Kanalende (25) angedrückt ist. An jeder Rahmenseite sind je nach deren Länge mehrere Klammern (30) angeordnet. Ausser dieser für die Verwendung der Klammern (30) speziell ausgebildeten Schenkel (7) weist das Rahmenprofil (2) etwa auf der Längsmitte eine T-Nut (8) auf, in welche ein schienenförmiger Körper (10), welcher zuvor auf die Nabe (4a) eines am Ende einer Klappe (3) angeordneten Zahnrades (4) aufgesteckt ist, vom Ende des Rahmenprofils (2) aus eingeschoben wird, wodurch die zur Herstellung eines Rahmens mit Drehlagerungen benötigte Montagearbeit wesentlich vereinfacht wird.

Rahmenprofil

Die Erfindung betrifft ein Rahmenprofil für
einen zur Aufnahme der Lagerung von drehbaren Körpern
bestimmten Rahmen, insbesondere für drehbare Klappen
in einem Lüftungskanal, mit zwei durch einen Steg
verbundenen Schenkeln des im wesentlichen U-förmigen
Querschnitt aufweisenden Rahmenprofils.

Bei einem aus den Rahmenprofilen hergestellten
Rahmen dient jeder der beiden Schenkel des Rahmenprofils
zum Anflanschen des Rahmens an das Ende eines Kanals,
der ebenfalls mit einem zum Anflanschen geeigneten
Rahmen ausgestattet ist. Es sind verschiedene Profile
bekannt, mit denen unter Verwendung zusätzlicher Winkelstücke ein Rahmen zum Anflanschen eines Kanalendes
hergestellt werden können. Meistens müssen diese bekannten Profile am Ende der vier Kanalseitenwände durch
Punktschweissung befestigt werden. Für die Herstellung
der Flanschverbindung erstrecken sich dann Verbindungsschrauben durch die Eckwinkelstücke gegeneinander
liegender Rahmen und zwischen den Ecken sind längs
einer Rahmenseite in Abständen verteilt zusätzliche
Befestigungsmittel wie Klemmbügel oder Treibschieber
angeordnet, um die Flansche gegeneinander zu drücken.

Um einen zum Anflanschen dienenden Rahmen
an einem Kanalende ohne Schweissarbeiten anbringen
zu können, sind auch bereits Profilschienen mit einem
im wesentlichen U-förmigen Querschnitt bekannt, die
in einen am Kanalseitenwandende ausgebildeten nutenförmigen Kragen hineingeschoben werden, und bei welchen
Profilschienen der am Kanal weiter aussen befindliche
Schenkel eine keilförmige Verdickung derart aufweist,
dass an der Schrägfläche derselben eine besonders
ausgebildete Klammer angreift, die einen einem festen
Arm gegenüberliegenden verschwenkbaren und bis in eine Uebertotpunktlage drückbaren Arm aufweist, so
dass mit einer solchen im aufgeschwenkten Zustand
über zwei die gegeneinander zu flanschenden Rahmen
bildenden Profilschienen aufsetzbaren Klammer die
Rahmen gegeneinander gedrückt werden können. Diese
ohne Schweissarbeiten auskommende rationelle Methode
zum Gegeneinanderdrücken von Flansche bildenden Rahmen
ist bisher nur für mit einem nutenförmigen Kragen
oder einem Abbug versehene Kanalenden und im Zusammenwirken mit zu diesen Kanalenden passenden, besonders
ausgebildeten Profilschienen verwendet worden.

Die der vorliegenden Erfindung zugrunde liegende
Aufgabe bestand darin, ein Rahmenprofil für einen
zur Aufnahme der Lagerung von drehbaren Körpern bestimmten Rahmen derart auszubilden, dass der aus den Rahmenprofilen gebildete Rahmen ohne arbeitsintensiven Aufwand
und mit wenigen Handgriffen an ein Kanalende bzw.
einen in entsprechender Weise ausgebildeten anderen
Rahmen angeflanscht werden kann. Zur Lösung dieser
Aufgabe weist das Rahmenprofil die Merkmale des Anspruchs
1 auf. Zweckmässig dient die an dem keilförmig verdickten
Schenkelende des Rahmenprofils vorhandene Schrägfläche
als Anlagefläche für eine Klammer zum Zusammenklammern
des Rahmenprofils und eines gegen dessen Schenkel
anzuliegen bestimmten Verbindungsflansches eines anschliessenden Kanals, wobei ein federnder, als runder
Wulst ausgebildeter Arm der Klammer gegen die Schrägfläche des Schenkelendes angedrückt ist.

Weitere Einzelheiten und Vorteile der Erfindung
ergeben sich aus der nachfolgenden Beschreibung und
den Zeichnungen, in denen eine Ausführungsform der
Erfindung rein beispielsweise dargestellt ist. Es
zeigen:

Fig. 1 die Vorderansicht der rechten Hälfte
eines fertigen Rahmens;

3

Fig. 2 einen Vertikalschnitt durch den Rahmen gemäss Fig. 1 nach der Linie II-II;

Fig. 3 einen Horizontalschnitt durch den Rahmen gemäss Fig. 1 nach der Linie III-III;

Fig. 4 einen Horizontalschnitt durch den Rahmen gemäss Fig. 1 nach der Linie IV-IV;

Fig. 5 ein einzelnes Rahmenprofil in grösserem Massstab in Ansicht von der Stirnseite;

Fig. 6 einen Querschnitt durch den Rahmen entsprechend Fig. 3, der durch eine Klammer mit einem anschliessenden Kanal verbunden ist;

Fig. 7 die Verbindung von Rahmen und Kanal durch eine Klammer gemäss Fig. 6 ausschnittweise von oben gesehen;

Fig. 8 die Klammer in schaubildlicher Darstellung;

Fig. 9 und 10 eine Draufsicht und Vorderansicht eines die Drehlagerung aufnehmenden schienenförmigen Körpers;

Fig. 11 und 12 eine Ansicht der Schmalseite und der Frontseite eines Eckwinkelstücks.

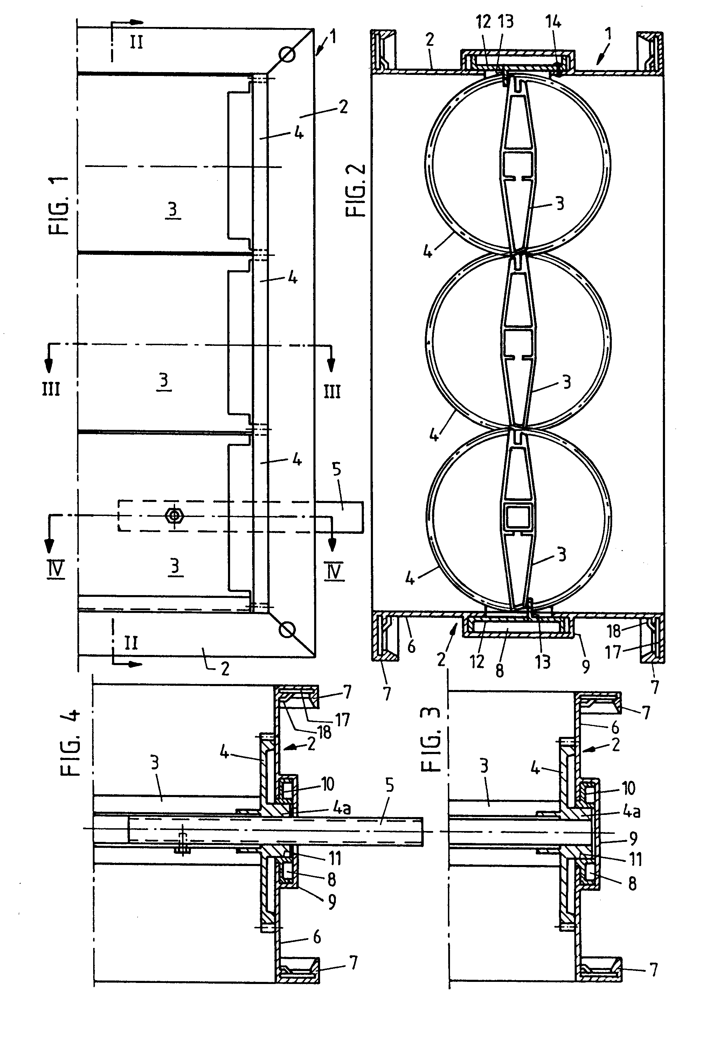

Ein rechteckförmiger Rahmen 1 gemäss Fig. 1 und 2 ist aus vier im Querschnitt gleich ausgebildeten Rahmenprofilen 2 hergestellt, die in einer gelieferten Länge von mehreren Metern entsprechend der geforderten Seitenlänge des Rahmens abgelängt und auf auf Gehrung zugeschnitten werden. In dem Rahmen 1 sind in der gleichen Querschnittsebene übereinander drei Klappen 3 drehbar gelagert, die in der Drehstellung gemäss Fig. 2 die Schliessstellung einnehmen, so dass die Klappen den Luftdurchtritt durch den Rahmen 1 absperren und durch an den Enden der Klappen angeordnete Zahnräder 4 in eine Offenstellung gedreht werden können, wobei die von benachbarten Klappen 3 in Eingriff stehenden Zahnräder 4 die benachbarten Klappen in entgegengesetzter Drehrichtung verschwenken. Für den Drehantrieb ist nur an einer Stelle des Rahmens 1 eine Drehachse 5 durch das Rahmenprofil 2 nach aussen geführt, wie aus Fig. 1 und Fig. 4 hervorgeht.

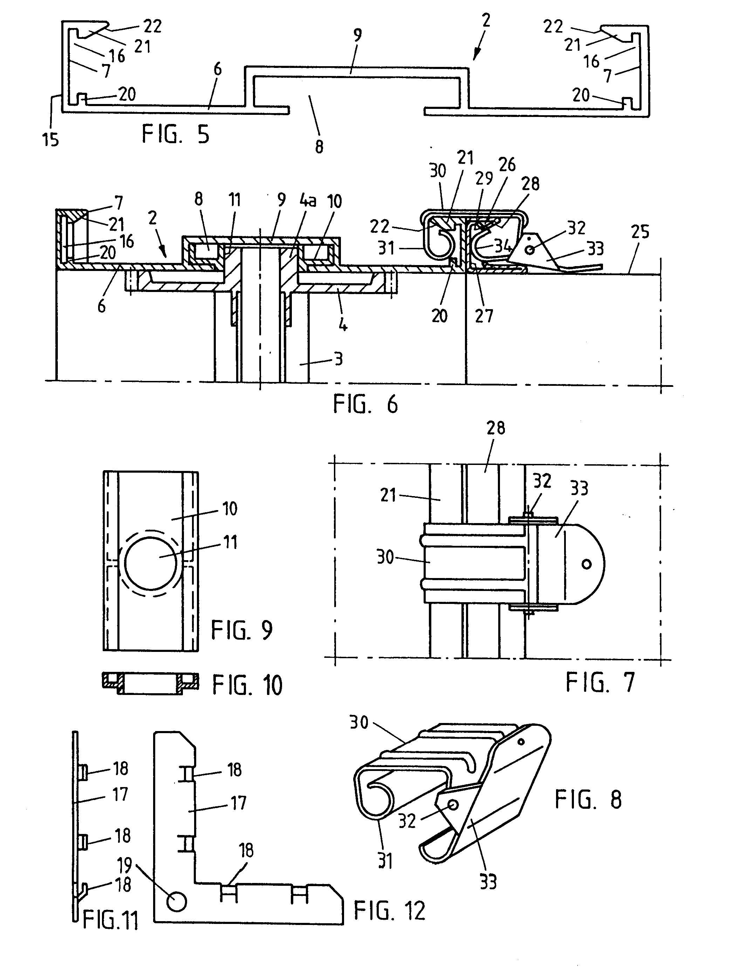

Das zur Herstellung des Rahmens 1 verwendete Rahmenprofil 2, das in Fig. 5 in grösserem Massstab dargestellt ist, weist als gezogenes Profil einen im wesentlichen U-förmigen Querschnitt auf, bei dem an den Längsrändern eines Stegs 6 zwei Schenkel 7 rechtwinklig anschliessen. Etwa auf der Längsmitte des Stegs 6 ist eine über die Länge des Rahmenprofils 2 sich erstreckende T-Nut 8 ausgebildet, die von einer aus der ebenen Fläche des Stegs 6 vorspringenden flachen Rinne 9 und von der auf der Längsmitte unterbrochenen ebenen Stegfläche 6, die sich über die einander gegenüberliegenden Ränder der Rinne diese teilweise überdeckend hinaus erstreckt, gebildet ist. Der ebene Steg 6, die Rinne 9 und die Schenkel 7 des Rahmenprofils 2 sind einstückig ausgebildet. Die T-Nut 8 dient zum Einschieben von die Drehlagerungen für die Klappen 3 aufnehmenden schienenförmigen Körpern 10, die als Einzelteil in den Figuren 9 und 10 in kleinerem Massstab dargestellt sind. Jeder schienenförmige Körper 10 besitzt eine Länge, die dem Abstand zwischen den Achsen von zwei benachbarten Klappen 3 entspricht. Bei der in den Figuren 1 und 2 dargestellten Ausführungsform des Rahmens 1 sind daher drei schienenförmige Körper 10 hintereinander in ein Rahmenprofil 2 hineingeschoben. Jeder schienenförmige Körper 10 weist in der Mitte eine Bohrung 11 auf, in welche die Nabe 4a eines Zahnrades 4 hineingesteckt ist. Die Nabe 4a des Zahnrades 4 dient somit als Drehzapfen für die mit dem Zahnrad verbundene Klappe 3, die an ihren beiden Enden mit je einem Zahnrad 4 fest verbunden ist.

Das Rahmenprofil 2 mit der T-Nut 8 zum Einschieben der schienenförmigen Körper 10 ermöglicht eine sehr vereinfachte Montage des Rahmens 1 mit darin angeordneten drehbaren Klappen 3. Dabei wird auf je eine Klappe 3 an ihren beiden Enden jeweils ein Zahnrad 4 aufgesteckt und auf die Nabe 4a des Zahnrades 4 jeweils ein schienenförmiger Körper 10 aufgesteckt und dann kann durch Einschieben des schienenförmigen Körpers 10 in die T-Nut 8 des Rahmenprofils 2 diese Einheit in einen drei Rahmenprofile 2 umfassenden Rahmen von der vierten noch offenen Rahmenseite aus eingesetzt werden. Dieser Vorgang wird bei drei in dem Rahmen 1 anzuordnenden Klappen dreimal wiederholt und anschliessend muss nur noch die vierte Rahmenseite eingefügt werden. Im Hinblick auf den richtigen Zahneingriff der Zahnräder 4 können geringe Massabweichungen auch noch durch Veränderung der Länge der schienenförmigen Körper 10 ausgeglichen werden. Das Rahmenprofil 2 ermöglicht somit eine wesentliche Vereinfachung der Montage zur Herstellung eines Rahmens mit darin angeordneten drehbaren Klappen. Dabei enthalten nur zwei gegenüberliegende Rahmenprofile 2 des Rahmens 1 die Drehlagerungen für die Klappen 3. Wie aus Fig. 2 hervorgeht, ist aber auch die T-Nut 8 der beiden anderen Rahmenprofile 2 für die Aufnahme eines weiteren etwas anders ausgebildeten schienenförmigen Körpers 12 vorgesehen. An diesem ist ein in den Schwenkkreis der Klappe 3 hineinragender Anschlag 13 fest angeordnet. Die Breite des schienenförmigen Körpers 12 ist etwas geringer als die lichte Weite der T-Nut 8, so dass der schienenförmige Körper 12 in der T-Nut etwas verschiebbar
ist, um am Ende der Montage in der exakten Schliessstellung der Klappe 3 den Anschlag genau zu fixieren,
zu welchem Zweck der schienenförmige Körper 12 dann
mit einem Niet 14 befestigt wird.

Um aus den Rahmenprofilen 2 einen Rahmen 1
fest zusammenfügen zu können und um diesen Rahmen
in zweckmässigerweise ohne viel Montagearbeit an ein
Kanalende anflanschen zu können, sind die beiden Schenkel
7 des Rahmenprofils 2 in besonderer Weise ausgebildet
und weisen eine parallel zu der zum Anflanschen bestimmten Aussenfläche 15 sich erstreckende T-Nut 16 auf,
die zum Einschieben von flachen Eckwinkelstücken 17
gemäss Fig. 11 und 12 bestimmt ist. Der engere Halsteil
der T-Nut 16 ist auf der dem Steg 6 zugewandten Seite
von einer von der Stegfläche vorstehenden schmalen
Leiste 20 gebildet, die sich über die Länge des Rahmenprofils 2 erstreckt, und auf der Leiste 20 gegenüberliegenden Seite von einer an dem verbreiterten Schenkelende
von dessen Rand zum Halsteil der T-Nut hin ansteigenden
keilförmigen Verdickung 21 gebildet. Zum Zusammenfügen
des Rahmens 1 ist in die T-Nut 16 von zwei rechtwinklig
aneinander stossenden Rahmenprofilen 2 ein Eckwinkelstück
17 gemäss Fig. 11 und 12 eingeschoben. Dieses besitzt
an seinen beiden Schenkeln durch Stanzen und seitliches
Herausbiegen einzelne seitlich abstehende Lappen 18,
die bei dem eingeschobenen Eckwinkelstück über die
Leiste 20 greifen und am Ende der Montage mit einem
Werkzeug in die verformbare Leiste 20 hineingedrückt
werden, wodurch das Eckwinkelstück 17 an zwei Rahmenprofilen fest verankert ist. Eine Bohrung 19 in jedem
Eckwinkelstück 17 dient zur Aufnahme einer nicht dargestellten Schraube , mit der zwei Rahmen aneinander geflanscht werden.

Wenn der aus den Rahmenprofilen 2 bestehende Rahmen 1 an das Ende eines im Querschnitt rechteckförmigen Kanals angeflanscht werden soll, dann besitzt dieses Kanalende einen ähnlich ausgebildeten Endflansch. Die Verbindung des Rahmens mit einem anschliessenden Kanal-Endflansch ist in Fig. 6 dargestellt. Die auf der rechten Seite dargestellte Kanalseitenwand 25 besitzt einen durch zweimaliges rechtwinkliges Abbiegen gebildeten nutenförmigen Kragen 26. In diesen Kragen 26 ist eine im Querschnitt im wesentlichen U-förmige Profilschiene 27 eingeschoben, wobei der gefalzte obere Schenkel 28 den zurückgebogenen Rand des nutenförmigen Kragens 26 aufnimmt. Durch die an der Innenseite ausgebildete Sicke 29 ist der Schenkel 28 der Profilschiene im Querschnitt ebenfalls keilförmig ausgebildet und besitzt somit einen ähnlichen Querschnitt wie die keilförmige Verdickung 21 am Ende des Schenkels 7 des Rahmenprofils 2. Die Schrägfläche 22 der keilförmigen Verdickung 21, die etwa halb so breit wie die Breite des Schenkelendes ist, dient als Anlagefläche für eine Klammer 30, mit der das Rahmenprofil 2 und die Profilschiene 27 gegeneinander gedrückt werden. Diese Klammer 30 ist in Fig. 6 in Seitenansicht, in Fig. 7 von oben gesehen und in Fig. 8 in geöffnetem Zustand dargestellt, besteht im wesentlichen aus Federstahl und besitzt einen als runden Wulst ausgebildeten federnden Arm 31, der unter Federwirkung gegen die Schrägfläche 22 der keilförmigen Verdickung 21 angedrückt ist. Die Feder 30 weist an der dem federnden Arm 31 gegenüberliegenden Seite einen um eine Schwenkachse 32 schwenkbaren Hebel 33 mit einem einwärts gerichteten und ebenfalls als runder Wulst ausgebildeten federnden
Arm 34 auf, der gegen die Profilschiene 27 und deren
oberen Schenkel 28 angedrückt wird, wenn der Hebel
33 bis zur Anlage gegen die Kanalseitenwand 25 heruntergedrückt worden ist.

Die Schenkel 7 des Rahmenprofils 2 mit der
besonderen Ausgestaltung der T-Nut 16 der keilförmigen
Verdickung 21 am Schenkelende sind somit speziell
für die Anwendung dieser Klammer als Verbindungselement
ausgebildet und je nach Seitenlänge des Rahmens 1
werden mehrere Klammern 30 in Abständen voneinander
an einer Rahmenseite angeordnet, um eine Flanschverbindung auf sehr einfache Weise herzustellen.

Schmidlin AG                    1

P a t e n t a n s p r ü c h e

1. Rahmenprofil für einen zur Aufnahme der Lagerung von drehbaren Körpern bestimmten Rahmen, insbesondere für drehbare Klappen in einem Lüftungskanal, mit zwei durch einen Steg verbundenen Schenkeln des im wesentlichen U-förmigen Querschnitt aufweisenden Rahmenprofils, dadurch gekennzeichnet, dass in jedem der zur Bildung eines Flansches dienenden Schenkel (7) eine parallel zu der zum Anflanschen bestimmten Aussenfläche sich erstreckende T-Nut (16) zum Einschieben eines flachen Eckwinkelstücks (17) ausgebildet ist, bei welcher der engere Halsteil der T-Nut (16) auf der dem Steg (6) zugewandten Seite von einer von der Stegfläche vorstehenden schmalen Leiste (20), die durch Pressdruck verformbar ist, und auf der gegenüberliegenden Seite von einem zur Profilmitte hin verbreiteten Schenkelende mit einer zum Halsteil der T-Nut (16) hin ansteigenden keilförmigen Verdickung (21) gebildet ist.

2. Rahmenprofil nach Anspruch 1, dadurch gekennzeichnet, dass die Schrägfläche (22) des keilförmig verdickten Schenkelendes (21) des Rahmenprofils (2) etwa halb so breit wie das zur Profilmitte hin verbreiterte Schenkelende ist und als Anlagefläche für eine Klammer (30) zum Zusammenklammern des Rahmenprofils (2) und eines gegen dessen Schenkel (7) anzuliegen bestimmten Verbindungsflansches (26-29) eines anschliessenden Kanals (25) dient, wobei ein federnder, als runder Wulst ausgebildeter Arm (31) der Klammer (30) gegen die Schrägfläche (22) des Schenkelendes (21) angedrückt ist.

F 14 177 CH - vF

3. Rahmenprofil nach Anspruch 1, dadurch gekennzeichnet, dass etwa auf der Längsmitte des Stegs (6) eine über die Länge des Rahmenprofils (2) und parallel zu den Schenkeln (7) sich erstreckende, zur einen Stegseite hin offene T-Nut (8) im Rahmenprofil (2) ausgebildet ist, welche zum Einschieben von die Drehlagerungen aufnehmenden, schienenförmigen Körpern (10) dient.

4. Rahmenprofil nach Anspruch 3 , dadurch gekennzeichnet, dass die T-Nut (8) von einer aus der ebenen Stegfläche (6) vorspringenden flachen Rinne (9) gebildet ist und die auf der Längsmitte unterbrochene ebene Stegfläche (6) sich über die einander gegenüberliegenden Ränder der Rinne (9) diese teilweise überdeckend hinaus erstreckt.

5. Rahmenprofil nach Anspruch 4, dadurch gekennzeichnet, dass die Schenkel (7), der die Schenkel verbindende Steg (6) und die flache Rinne (9) einstückig ausgebildet sind.

6. Verwendung des Rahmenprofils nach Anspruch 1, zur Herstellung eines Rahmens (1), in dem drehbare Körper (3), insbesondere Klappen drehbar gelagert sind, dadurch gekennzeichnet, dass drei entsprechend der geforderten Länge der Rahmenseite abgelängte und auf Gehrung zugeschnittene Rahmenprofile zusammenmontiert werden und dass von der noch offenen vierten Rahmenseite aus in die auf der Rahmenprofil-Längsmitte verlaufenden T-Nuten (8) von zwei gegenüberliegenden Rahmenprofilen (2) die zur Lagerung dienenden schienenförmigen Körper (10) eingeschoben werden, die jeweils eine Bohrung (11) aufweisen und mit dieser durch Vormontage auf eine Nabe (4a) je eines an den Enden eines drehbaren Körpers (3) fest angeordneten Zahnrades (4) aufgesteckt sind und dass dann nach Anbringung des vierten Rahmenprofils (2) die Rahmenprofile miteinander fest verbunden werden.

7. Verwendung nach Anspruch 6, dadurch gekennzeichnet, dass die Rahmenprofile (2) durch Einschieben je eines Eckwinkelstücks (17) in die T-Nuten (16) jeweils rechtwinklig aneinander liegender Schenkel (7) zusammenmontiert werden und dass an den Eckwinkelstücken (17) durch Stanzen und seitliches Herausbiegen ausgebildete, seitlich abstehende Lappen (18), die bei montiertem Eckwinkelstück (17) die schmale Leiste (20) der am Schenkel (7) des Rahmenprofils (2) ausgebildeten T-Nut (16) übergreifen, zwecks gegenseitiger Verankerung der Rahmenprofile (2) und der Eckwinkelstücke. (17) gegen die genannte schmale Leiste (20) unter Verformung derselben abgepresst werden.

0223173

FIG. 1

FIG. 2

FIG. 3

FIG. 4

FIG. 5

FIG. 6

FIG. 9

FIG. 10

FIG. 7

FIG. 8

FIG.11

FIG. 12

Europäisches
Patentamt

**EUROPÄISCHER RECHERCHENBERICHT**

Nummer der Anmeldung

EP 86 11 5543

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| Y | US-A-3 653 317 (N.J. COSTANZO) * Figuren; Zusammenfassung; Spalte 3, Zeilen 19-43; Spalte 2, Zeilen 70-73; Spalte 4, Zeilen 58-69 * | 1 | F 16 L 23/00 E 06 B 7/086 F 24 F 13/15 |
| A | | 3-6 | |
| | --- | | |
| Y | EP-A-0 143 150 (SCHMIDLIN AG) * Figuren 2,4; Zusammenfassung * | 1 | |
| A | | 7 | |
| | --- | | |
| A | EP-A-0 152 512 (SCHMIDLIN AG) * Figuren; Zusammenfassung * | 2 | |
| | --- | | |
| A | GB-A-1 053 089 (G. KROGSETH) * Figuren; Seite 1, Zeilen 24-43 * | 6 | |
| | ----- | | |

RECHERCHIERTE SACHGEBIETE (Int. Cl.4)

F 16 L
F 24 F
E 06 B

Der vorliegende Recherchenbericht wurde für alle Patentansprüche erstellt.

| Recherchenort | Abschlußdatum der Recherche | Prüfer |
|---|---|---|
| DEN HAAG | 12-02-1987 | NARMINIO A. |

EPA Form 1503 03 82